# EUROPEAN PATENT APPLICATION

(11) **EP 2 695 674 A1**
(43) Date of publication of application: **12.02.2014**
(21) Application number: 12767859.7
(22) Date of filing: 06.04.2012
(51) Int. Cl.: B01J 29/74, B01D 53/94, F01N 3/10

(54) **EXHAUST GAS PURIFICATION OXIDATION CATALYST**

(30) Priority: 08.04.2011 JP 2011086219
(71) Applicant: TOYOTA JIDOSHA KABUSHIKI KAISHA, Toyota-shi, Aichi-ken, 471-8571 (JP)
(72) Inventor: TAKAGI, Nobuyuki, Toyota-shi, Aichi-ken 471-8571 (JP); SOBUE, Yuichi, Toyota-shi, Aichi-ken 471-8571 (JP); IKEDA, Hanae, Toyota-shi, Aichi-ken 471-8571 (JP); KAMADA, Masaya, Toyota-shi, Aichi 470-0334 (JP); INDE, Ryoichi, Kakegawa-shi, Shizuoka 437-1492 (JP)
(74) Representative: Kuhnen & Wacker
(86) International application number: PCT/JP2012/059546
(87) International publication number: WO 2012/137930

(57) **Abstract**

The oxidation catalyst for exhaust gas purification provided by the present invention includes a support supporting a noble metal that catalyzes the oxidation of carbon monoxide (CO). The support is mainly constituted by a composite metal oxide including, in terms of oxides, Al and Zr, or Al, Zr and Ti at the following mass ratios: Al₂O₃ 40 to 99% by mass, ZrO₂ 1 to 45% by mass, and TiO₂ 0 to 15% by mass.

## Description

### Technical field

The present invention relates to an oxidation catalyst for exhaust gas purification. More particularly, the present invention relates to an oxidation catalyst suitable for exhaust gas purification in a diesel engine and to a support constituting the catalyst. The present application claims priority to Japanese Patent Application No. 2011-086219 filed on April 8, 2011, and the contents of this patent application is incorporated by reference herein in its entirety.

### Background Art

Exhaust gas discharged from an internal combustion engine such as a gasoline engine and a diesel engine includes hazardous components such as carbon monoxide (CO), hydrocarbons (HC), nitrogen oxide (NOₓ), and particulate matter (PM). Recent rise in environmental awareness all over the world created a demand for further performance improvement of exhaust gas purification catalysts used to purify and discharge those exhaust gas components.

One of the tasks relating to the exhaust gas purification catalysts is the improvement in catalytic performance at a comparatively low temperature of exhaust gas. Where the exhaust gas temperature is low, as when the engine is started (the exhaust gas temperature in this case is typically equal to or lower than 200°C, for example, about 180°C or lower), the activity of catalyst metal such as platinum is low and the efficiency of exhaust gas purification is lower than that at a high temperature.

For the reasons, measures have been taken to improve catalytic activity at a low exhaust gas temperature, for example, when the engine is started. For example, Patent Literature 1 discloses an exhaust gas purification device in which an oxidation catalyst body of platinum or palladium is disposed on the upstream side of the exhaust gas, and a reduction catalyst body of rhodium, iridium, gold, cobalt, or copper is disposed on the downstream side of the exhaust side. Patent Literature 1 indicates that such a configuration makes it possible to improve the conversion performance (oxidation and reduction performance) of nitrogen oxide even in a low-temperature region.

Patent Literature 2 and 3 disclose examples of other conventional techniques used in the related technical field. For example, Patent Literature 2 describes an NOx adsorption and reduction catalyst of high durability in which sulfur poisoning can be inhibited, and Patent Literature 3 describes a highly durable exhaust gas purification catalyst in which sintering of catalyst components in a high-temperature lean atmosphere can be inhibited. Further, Patent Literature 4 describes a CO removing catalytic device for removing carbon monoxide from hydrogen-based fuel gas supplied to a polymer electrolyte fuel cell (PEFC).

### Citation List

### Patent Literature

Patent Literature 1: Japanese Patent Application Publication No. H10-118454
Patent Literature 2: Japanese Patent Application Publication No. 2002-282688
Patent Literature 3: Japanese Patent Application Publication No. 2006-043637
Patent Literature 4: Japanese Patent Application Publication No. 2005-067917

### Summary of Invention

Carbon monoxide (CO), which can be referred to as an unburned matter among the components contained in the exhaust gas of an internal combustion engine of an automobile or the like, should be discharged upon conversion into carbon dioxide (CO₂) by oxidation. In particular, when the exhaust gas temperature is comparatively low, as when the engine is started, the CO discharge amount tends to increase over that at a high temperature. Further, in hybrid vehicles, which have become very popular, the period of time (for example, the period of time in which the vehicle is temporarily stopped or driven only by a motor) in which the engine is stopped when the vehicle is used (runs) is long, thereby decreasing the exhaust gas temperature. With this in view, an oxidation catalyst for exhaust gas purification is needed that has high catalytic activity and excels in capacity to oxidize (purify) CO contained in low-temperature exhaust gas.

In particular, in diesel engines, the exhaust gas temperature tends, as a whole, to be lower than that in gasoline engines, and there is a great need to develop an exhaust gas purification catalyst for diesel engines that excels in CO purification performance (CO oxidation performance) in a low-temperature range.

However, the exhaust gas purification device described in Patent Literature 1 mentioned hereinabove has been developed with the object of purifying NOx contained in exhaust gas, and has not been concerned at all with the purification of CO contained in low-temperature exhaust gas. The techniques described in Patent Literature 2 and 3 are also not aimed at the purification of CO contained in low-temperature exhaust gas. Further, the CO removing catalytic device described in Patent Literature 4 has been developed with the object of removing CO from hydrogen-based fuel gas (reducible gas) supplied to a PEFC and is not suitable for oxidizing CO contained in low-temperature exhaust gas (in particular, exhaust gas of a diesel engine that includes HC and PM and has a high oxygen concentration).

Accordingly, it is an object of the present invention to provide an oxidation catalyst for exhaust gas purification that is different from the catalysts described in the abovementioned patent literature and is configured to be capable of effectively oxidizing CO even at a comparative low temperature of exhaust gas. More particularly, it is an object of the present invention to provide an oxidation catalyst for exhaust gas purification that demonstrates excellent CO oxidation performance in a low-temperature range and can be applied to diesel engines. Yet another object of the present invention is to provide a catalyst support suitable for constructing an oxidation catalyst for exhaust gas purification that excels in CO oxidation in a low-temperature range.

The results of the comprehensive research conducted by the inventors demonstrate that catalytic activity of noble metals catalyzing CO oxidation (referred to hereinbelow simply as "oxidation catalyst metal") can be increased even in a low-temperature range of exhaust gas and, more specifically, sintering of the oxidation catalyst metal when it is used for exhaust gas purification (in particular, in a state in which the metal is exposed to high-temperature exhaust gas) can be inhibited and catalytic activity sites of the noble metal (oxidation catalyst metal) can be maintained by setting the composition of a composite metal oxide used as a catalyst support and the content ratio thereof within specific ranges.

Thus, the preferred oxidation catalyst for exhaust gas purification provided by the present invention has a support and a noble metal (oxidation catalyst metal) that is supported on the support and catalyzes the oxidation of carbon monoxide.

The support is mainly constituted by a composite metal oxide including, in terms of oxides, Al and Zr, or Al, Zr and Ti as constituent metal elements at the following mass ratios:

| | |
|---|---|
| Al₂O₃ | 40 to 99% by mass, |
| ZrO₂ | 1 to 45% by mass, |
| TiO₂ | 0 to 15% by mass. |

Typically, the oxidation catalyst for exhaust gas purification disclosed herein includes: a base material and a catalyst coat layer formed on the base material. The catalyst coat layer has a support mainly constituted by the composite metal oxide and the noble metal (oxidation catalyst metal) that is supported on the support and catalyzes the oxidation of carbon monoxide.

In the description below, the composite metal oxide including Al and Zr as the constituent metal elements (including no Ti) will be abbreviated as "AZ oxide", and the composite metal oxide including Al, Zr and Ti as the constituent metal elements will be abbreviated as "AZT oxide".

In the oxidation catalyst for exhaust gas purification disclosed herein, the AZT oxide including AL, Zr and Ti at the abovementioned mass ratios, or the AZ oxide including Al and Zr (including no Ti) at the abovementioned mass ratio is provided as the support. Those composite metal oxides function as acidic-basic supports having an acid amount and a base amount at a good balance with respect to the noble metal to be supported. More specifically, noble metal atoms (cations) can be strongly supported (bonded) through oxygen atoms (typically, O²⁻) to base centers present in the AZT oxide (or AZ oxide) of the abovementioned configuration and can inhibit grain growth, that is, sintering, of the supported noble metal (particles) when exposed to high-temperature exhaust gas. Therefore, the reduction in the number of catalytic activity centers can be prevented and stable exhaust gas purification (including CO oxidation) can be continuously performed.

Meanwhile, in the acid sites present in the AZT oxide (or AZ oxide) of the abovementioned configuration, the electrons of the supported noble meal (oxidation catalyst metal) can drift to the support side. As a result, the bonding strength of the noble metal atoms (cations) and oxygen is weakened, thereby making it possible to inhibit the generation of noble metal oxide and increase the reactivity (that is, CO oxidation reaction activity) of CO and oxygen atoms (typically, O²⁻) that have been activated on the noble metal atoms (cations).

Therefore, with the oxidation catalyst for exhaust gas purification of the present configuration, the operation effect in the base sites and the operation effect in the acid sites can be realized in a balanced manner. Therefore, the substance which is the object of purification, such as CO in exhaust gas, can be effectively and stably oxidized over a long period of time not only in a high-temperature range, but also in a low-temperature range (for example, about 200 to 400°C, or 200°C or below, for example, about 180°C or below, for example, about 150 to 200°C).

In a preferred embodiment of the oxidation catalyst for exhaust gas purification disclosed herein, the composite metal oxide includes Al and Zr, or Al, Zr and Ti, in terms of oxides, at the following mass ratios:

| | |
|---|---|
| Al₂O₃ | 50 to 90% by mass, |
| ZrO₂ | 5 to 40% by mass, |
| TiO₂ | 0 to 15% by mass (for example, 1 to 15% by mass). |

In a preferred example, the AZT oxide includes those metal components, in terms of oxides, at the following mass ratios:

| | |
|---|---|
| Al₂O₃ | 50 to 80% by mass, |
| ZrO₂ | 10 to 40% by mass, |
| TiO₂ | 1 to 15% by mass (for example, 2 to 15% by mass). It is particularly |

preferred that the content ratios satisfy the following condition: ZrO₂ > TiO₂.

In a more advantageous example, the AZ oxide includes those metal components, in terms of oxides, at the following mass ratios:

| | |
|---|---|
| Al₂O₃ | 60 to 90% by mass, |
| ZrO₂ | 10 to 40% by mass. |

The AZT oxide or AZ oxide of the abovementioned configuration functions as an acidic-basic catalyst support having an acid amount and a base amount in a particularly good balance with respect to the noble metal (oxidation catalyst metal) to be supported thereon. Therefore, the substance that is the purification object, such as CO in exhaust gas, can be more effectively and stably oxidized in a low-temperature region (for example, about 200 to 400°C, or 200°C or below, for example, about 180°C or below, for example, about 150 to 200°C) and a region of higher temperatures.

It is preferred that a material in which a crystallite size determined by X-ray diffraction is equal to or less than 10 nm be used as the support. By using the support with such a small crystallite size, it is possible to realize a higher catalytic activity.

In another preferred embodiment of the oxidation catalyst for exhaust gas purification disclosed herein, Pd particles are provided as the noble metal.

In the oxidation catalyst for exhaust gas purification of such a configuration, by providing palladium (Pd) particles as the noble metal (oxidation catalyst metal), it is possible to improve further the CO oxidation performance in a low-temperature region (for example, equal to or lower than 200°C).

In this embodiment, it is particularly preferred that the average particle diameter of palladium particles based on a CO pulse adsorption method be equal to or less than 5 nm (for example, equal to or less than 2 nm). By supporting the Pd particles of such small diameter, it is possible to improve further the CO oxidation performance in a low-temperature region such as described hereinabove.

In another preferred embodiment of the oxidation catalyst for exhaust gas purification disclosed herein, a hydrocarbon adsorbent is further provided. For example, a hydrocarbon adsorbent can be provided in at least part of the catalyst coat layer (for example, at least in an upper layer section in the case in which the catalyst coat layer has a two-layer structure constituted by a lower layer section (bottom layer section) close to the base material and the upper layer section (surface layer section) set apart from the base material).

In the oxidation catalyst for exhaust gas purification of such a configuration, the HC of exhaust gas typically can be absorbed by the hydrocarbon adsorbent contained in the entire catalyst coat layer or at least part thereof (for example, the surface layer section). As a result, the so-called HC poisoning, which is the decrease in activity of the oxidation catalyst metal (for example, platinum) with respect to CO oxidation due to the presence of HC, can be inhibited, in particular, in a state in which exhaust gas in a low-temperature region is supplied.

In this embodiment, it is preferred that zeolite particles be provided as the hydrocarbon adsorbent. Since zeolite particles have high selectivity with respect to the substance to be adsorbed, with the oxidation catalyst for exhaust gas purification of such a configuration, various HC components (for example, lower olefins with 6 or fewer carbon atoms and higher hydrocarbons with 7 or more carbon atoms) can be effectively adsorbed.

In another preferred embodiment of the oxidation catalyst for exhaust gas purification disclosed herein, the initial specific surface area A of the substrate determined by a BET 1 point method (nitrogen adsorption method) is equal to or greater than 110 m²/g (typically 100 m²/g < A < 200 m²/g). With such an initial specific surface area, a sufficient number of sites in which atoms (ions) of a noble metal such as palladium or platinum can be supported can be maintained.

It is even more preferred that the support be mainly constituted by the composite metal oxide including Ti (that is, the AZT oxide) as the constituent metal element, such that a TiO₂ peak is substantially undetectable by X-ray diffraction (XRD) even after thermal durability treatment conducted for 3 hours at 1000°C in the air. A specific feature of the support is that the intensity ratio (I_{Ti}/I_{Zr}) of the XRD peak intensity (I_{Ti}) of rutile-type titania (TiO₂) at a 2θ angle of 27 degrees (±0.2 degrees) to the XRD peak intensity (Izr) of zirconia (ZrO₂) at a 2θ angle of 30 degrees (±0.2 degrees) is equal to or less than 0.02. Here, θ is a diffraction angle in X-ray diffraction.

In the AZT oxide having such properties, the abovementioned three components, namely, the Al component (typically, Al₂O₃), Zr component (typically, ZrO₂), and Ti component (typically, TiO₂) are present in a highly dispersed state and a particularly high catalytic activity can be realized.

In particular, the oxidation catalysts for exhaust gas purification disclosed herein can be advantageously used for purifying the exhaust gas of a diesel engine.

The exhaust gas discharged from a diesel engine generally tends to have a temperature lower than that of the exhaust gas discharged from a gasoline engine. The oxidation catalysts for exhaust gas purification disclosed herein has a high high-temperature activity of the oxidation catalyst metal (noble metal), excels in CO oxidation (purification) in a low-temperature region, and is particularly suitable as an oxidation catalysts for exhaust gas purification for oxidizing (purifying) CO and other discharged substances contained in the exhaust gas of a diesel engine.

Therefore, the present invention provides an exhaust gas purification device provided with any of the oxidation catalysts for exhaust gas purification disclosed herein, more specifically an exhaust gas purification device for purifying the exhaust gas of a diesel engine (typically a diesel engine provided at a vehicle).

### Brief Description of Drawings

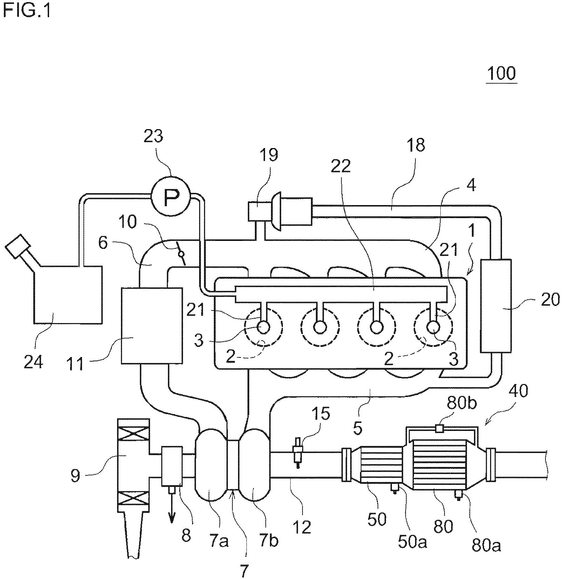

FIG. 1 is a schematic diagram of the exhaust gas purification device according to one embodiment of the present invention.

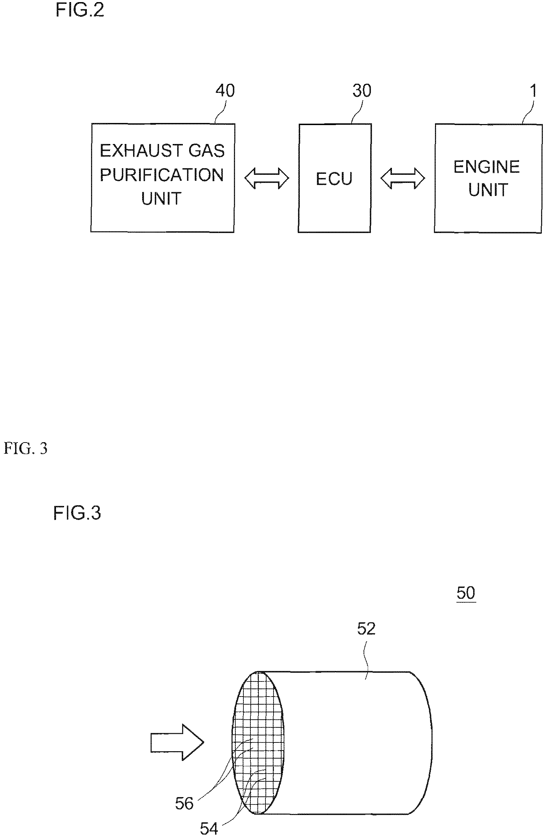

FIG. 2 illustrates schematically the control unit provided in the exhaust gas purification device according to one embodiment of the present invention.
FIG. 3 illustrates schematically the entire configuration of the oxidation catalyst for exhaust gas purification according to one embodiment of the present invention.

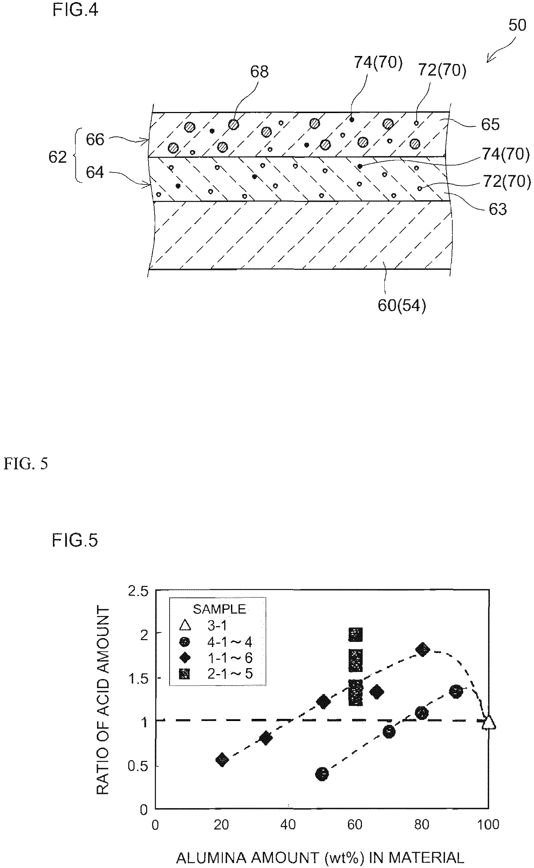

FIG. 4 is an enlarged view of the configuration of a rib wall portion in the oxidation catalyst for exhaust gas purification shown in FIG. 3.
FIG. 5 is a graph showing the relationship between the acid amount of each sample and the Al₂O₃ amount; the acid amount ratio of each sample is plotted against the ordinate, with the acid amount of sample 3-1 (alumina support) being taken as 1, and the Al₂O₃ amount (wt%) of each sample is plotted against the abscissa.

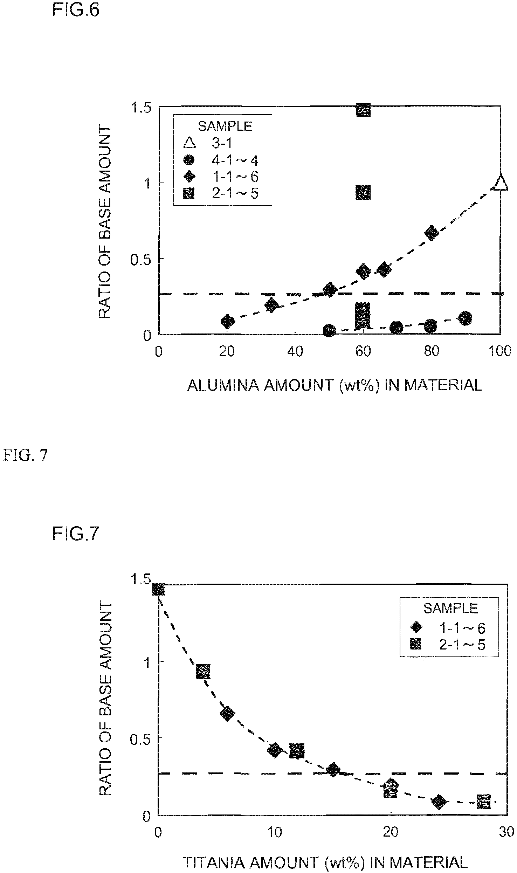

FIG. 6 is a graph showing the relationship between the base amount of each sample and the Al₂O₃ amount; the base amount ratio of each sample is plotted against the ordinate, with the base amount of sample 3-1 (alumina support) being taken as 1, and the Al₂O₃ amount (wt%) of each sample is plotted against the abscissa.
FIG. 7 is a graph showing the relationship between the base amount of each sample and the TiO₂ amount; the base amount ratio of each sample is plotted against the ordinate, with the base amount of sample 3-1 (alumina support) being taken as 1, and the TiO₂ amount (wt%) of each sample is plotted against the abscissa.

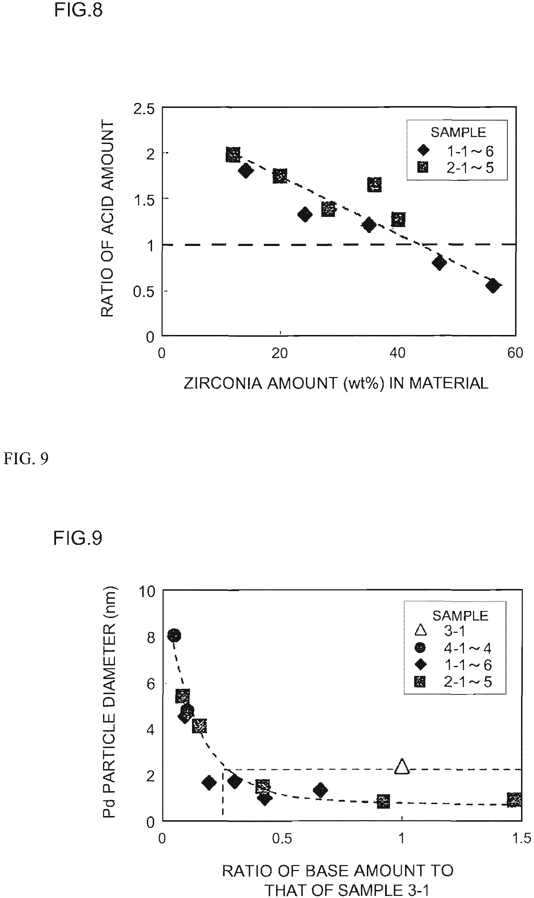

FIG. 8 is a graph showing the relationship between the base amount of each sample and the ZrO₂ amount; the base amount ratio of each sample is plotted against the ordinate, with the base amount of sample 3-1 (alumina support) being taken as 1, and the ZrO₂ amount (wt%) of each sample is plotted against the abscissa.
FIG. 9 is a graph showing the relationship between the base amount ratio of each sample and average particle diameter of palladium (Pd) particles after thermal degradation; the average particle diameter (nm) of Pd particles is plotted against the abscissa, and the base amount ratio of each sample is plotted against the ordinate, with the base amount of sample 3-1 (alumina support) being taken as 1.

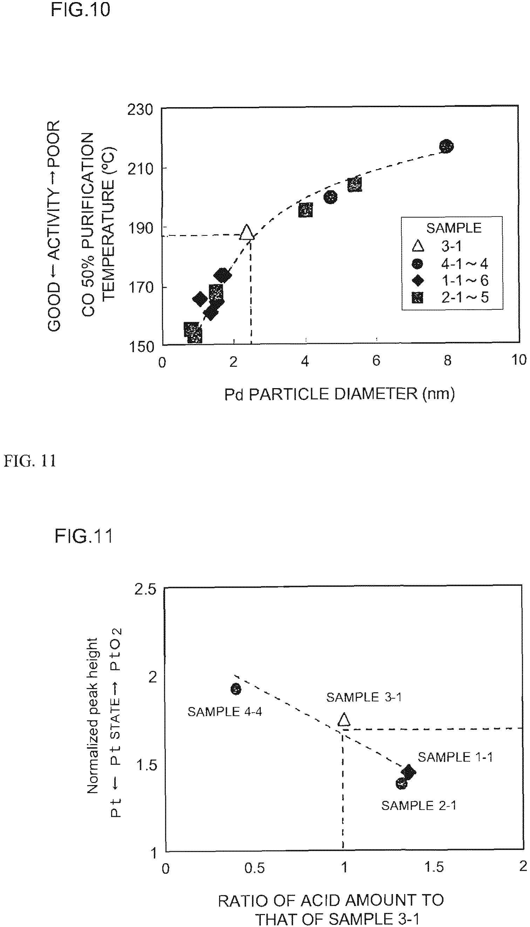

FIG. 10 is a graph showing the relationship between the palladium (Pd) particle diameter of each sample and the 50% purification temperature of CO after thermal degradation; the CO 50% purification temperature (°C) is plotted against the ordinate, and the average particle diameter (nm) of Pd particles is plotted against the abscissa.
FIG. 11 is a graph showing the relationship between the acid amount of each sample and the electron state of platinum (Pt) based on XAFS measurements; the electron state of Pt derived from the normalized peak height is plotted against the ordinate, and the acid amount ratio of each sample is plotted against the ordinate, with the acid amount of sample 3-1 (alumina support) being taken as 1.

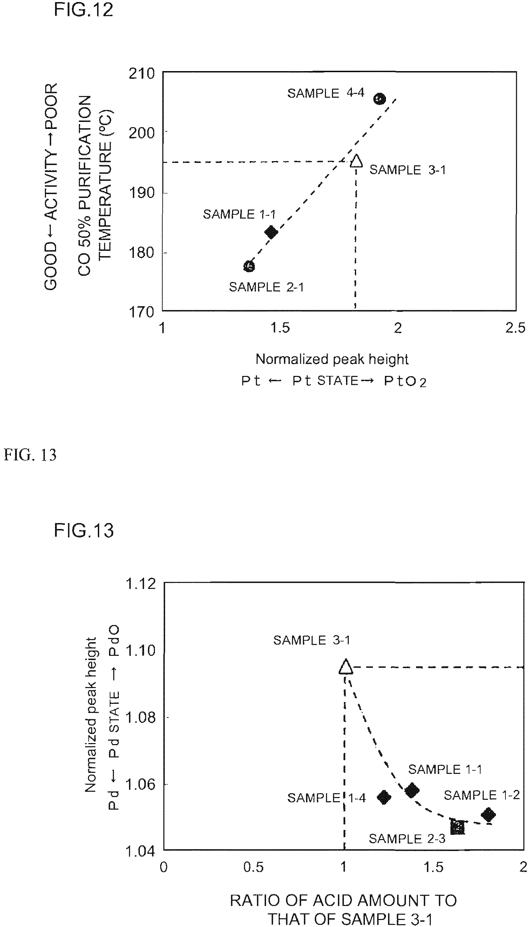

FIG. 12 is a graph showing the relationship between the CO 50% purification temperature after thermal degradation of each sample and the electron state of platinum (Pt) based on XAFS measurements; the CO 50% purification temperature (°C) is plotted against the ordinate, and the electron state of Pt derived from the normalized peak height is plotted against the abscissa.
FIG. 13 is a graph showing the relationship between the acid amount of each sample and the electron state of palladium (Pd) based on XAFS measurements; the electron state of Pd derived from the normalized peak height is plotted against the ordinate, and the acid amount ratio of each sample is plotted against the ordinate, with the acid amount of sample 3-1 (alumina support) being taken as 1.

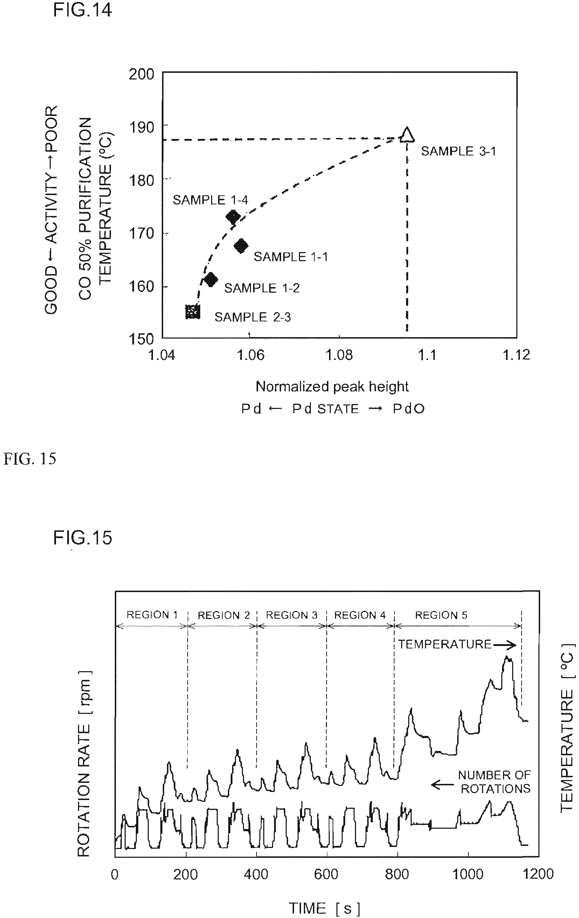

FIG. 14 is a graph showing the relationship between the CO 50% purification temperature after thermal degradation of each sample and the electron state of palladium (Pd) based on XAFS measurements; the CO 50% purification temperature (°C) is plotted against the ordinate, and the electron state of Pd derived from the normalized peak height is plotted against the abscissa.
FIG. 15 is a schematic diagram of a NEDC (New European Driving Cycle) used for evaluating the CO oxidation performance of the oxidation catalyst for exhaust gas purification used in the example (ordinate: revolution speed (rpm) (left), temperature (°C) (right); abscissa: time (s = second).

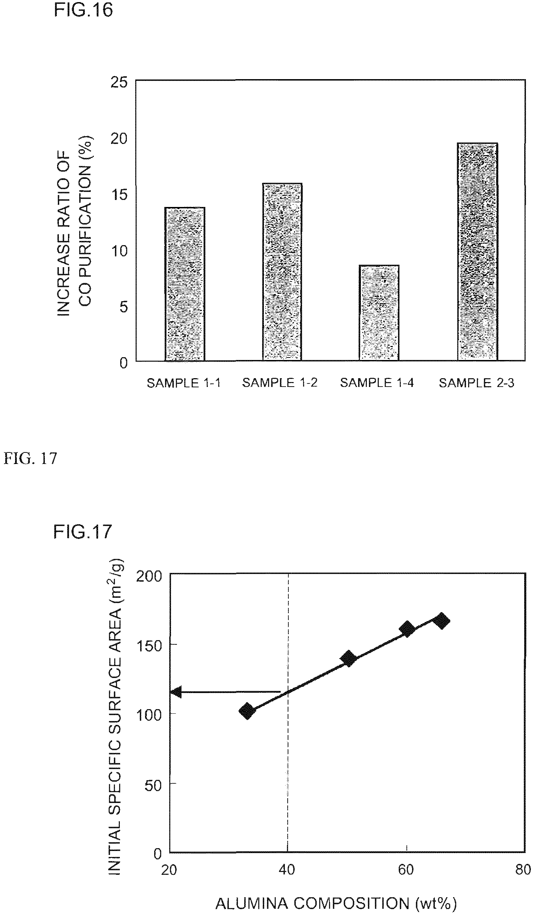

FIG. 16 is a graph illustrating the CO oxidation performance evaluation results for the oxidation catalyst for exhaust gas purification used in the example; ordinate: the increase ratio (%) for each sample (examples: abscissa) to the CO purification ratio in sample 3-1 (comparative example).
FIG. 17 is a graph showing the specific surface area based on a BET 1 point method for several samples (oxide powders constituting the support; abscissa: Al component (Al₂O₃ composition) in percent by mass, ordinate: initial specific surface area (m²/g).

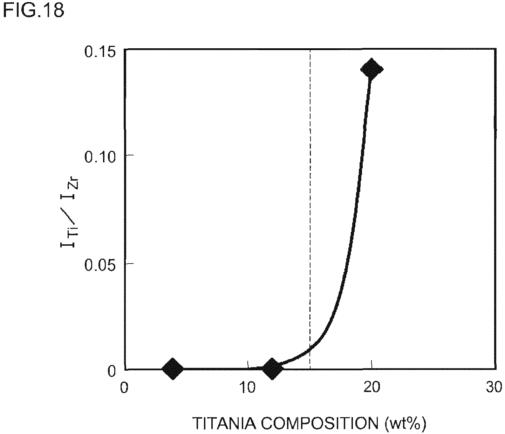

FIG. 18 is a graph showing the XRD peak intensity ratio (I_{Ti}/I_{Zr}) after the thermal durability treatment (in the air, 1000°C, 3 hours) of several samples (oxide powder constituting the support); abscissa; Ti component (TiO₂ composition) in percent by mass, ordinate: XRD peak intensity ratio (I_{Ti}/I_{Zr}).

### Description of Embodiments

The preferred embodiments of the present invention will be explained below with reference to the appended drawings. The features necessary for implementing the present invention, other than those specifically described in the present detailed description, can be considered as design maters for a person skilled in the related art. The present invention can be implemented on the basis of the contents disclosed in the present detailed description and general technical knowledge in the pertinent field.

As described hereinabove, the oxidation catalyst for exhaust gas purification disclosed heroin is advantageous for oxidizing CO contained in the exhaust gas (combustion gas) in a comparatively low-temperature region and converting it typically into CO₂, and can be preferably used for such applications. In particular, the catalyst can be advantageously used for exhaust gas purification in a variety of internal combustion engines, in particular vehicular diesel engines and gasoline engines. The catalyst can be more advantageously used in an exhaust system of a diesel engine in which the exhaust gas temperature is generally lower than that in the gasoline engine.

An embodiment of the exhaust gas purification device equipped with the oxidation catalyst for exhaust gas purification disclosed herein will be described hereinbelow with reference to the appended drawings. The case in which a diesel engine is provided as an internal combustion engines is explained in detail by way of example, but the application range of the present invention is not intended to be limited to this diesel engine.

As shown in FIG. 1, an exhaust gas purification device 100 of the present embodiment is mainly constituted by an engine unit 1 (the engine unit 1 includes an accelerator and other operational systems for driving the engine) including a diesel engine as the main component, an exhaust gas purification unit 40 provided in an exhaust system communicating with the engine unit 1, and an ECU (electronic control unit, that is, engine control unit) 30 (see FIG. 2) controlling the exhaust gas purification unit 40 and the engine unit 1. The oxidation catalyst for exhaust gas purification provided by the present invention can be used in part of the exhaust gas purification unit 40.

The engine unit 1 is typically provided with a plurality of combustion chambers 2 and fuel injectors 3 injecting fuel into the combustion chambers 2. Each combustion chamber 2 communicates with an intake manifold 4 and an exhaust manifold 5. The intake manifold 4 is connected by an intake duct 6 to the outlet of a compressor 7a of an exhaust turbocharger 7. The inlet of the compressor 7a is connected by an intake air amount detector 8 to an air cleaner 9. A throttle valve 10 is disposed inside the intake duct 6. A cooling device (intercooler) 11 for cooling the air flowing inside the intake duct 6 is disposed around the intake duct 6. The exhaust manifold 5 is connected to the inlet of an exhaust turbine 7b of the exhaust turbocharger 7. The outlet of the exhaust turbine 7b is connected to an exhaust passage (exhaust pipe) 12 through which the exhaust gas flows.

The exhaust manifold 5 and the intake manifold 4 are connected to each other by an exhaust gas recirculation passage 18 (referred to hereinbelow as EGR passage 18). An electronically controlled EGR control valve 19 is disposed inside the EGR passage 18. Further, an EGR cooling device 20 for cooling the EGR gas flowing inside the EGR passage 18 is disposed around the EGR passage 18.

Each fuel injector 3 is connected by a fuel supply pipe 21 to a common rail 22. The common rail 22 is connected through a fuel pump 23 to a fuel tank 24. In this configuration, the fuel pump 23 is a capacity-variable electronically controlled fuel pump. However, the configuration of the fuel pump 23 is not particularly limited.

A fuel supply valve 15 as a fuel supply means for supplying (injecting) the reducing agent, more specifically fuel (for example, a hydrocarbon) into the exhaust gas, and the below-described exhaust gas purification unit 40 are disposed in the order of description from the upstream side (left side in FIG. 1) to the downstream side (right side in FIG. 1) inside the exhaust passage (exhaust pipe) 12. Various devices (injectors or the like) that can inject fuel into the exhaust pipe 12 can be used as the fuel supply means.

As shown in FIG. 1, the exhaust gas purification unit 40 is provided with an oxidation catalyst 50 for exhaust gas purification (DOC) which serves for oxidizing CO and HC contained in the exhaust gas, and a particulate filter (DPF) 80 collecting the particulate matter (PM) contained in the exhaust gas. A temperature sensor 50a for detecting the temperature of the oxidation catalyst 50 for exhaust gas purification is mounted on the catalyst 50, and a temperature sensor 80a for detecting the temperature of the particulate filter 80 is mounted on the particulate filter 80. The temperature sensors 50a, 80a can be replaced with other means capable of estimating the catalyst temperature, and the arrangement positions of the temperature sensors 50a, 80a (or of other means) are not limited to those shown in the figures. Further, a differential pressure sensor 80b for detecting the difference in temperature between the locations before and after the filter 80 is mounted on the filter 80. The arrangement position of the fuel supply valve 15 is not limited to the above-described position, and the fuel supply valve may be disposed at any position, provided that the fuel can be supplied to the exhaust gas upstream of the exhaust gas purification unit 40.

As shown in FIG. 2, the ECU 30 is a unit that controls the engine unit 1 and the exhaust gas purification unit 40 and includes a digital computer and other electronic devices as structural components, in the same manner as a typical control device. Typically, the ECU 30 has a ROM (read only memory), a RAM (random access memory), a CPU (microprocessor), and an input port, and an output port connected to each other by a bidirectional bus.

A load sensor generating an output voltage proportional to the depression amount of an accelerator pedal (not shown in the figure) is connected to the accelerator pedal. The output voltage of the load sensor is inputted through a corresponding AD converter to an input port. A crank angle sensor generating an output pulse each time a crankshaft rotates through a predetermined angle (for example 10°) is connected to the input port.

The output signals from the temperature sensors 50a, 80a and differential pressure sensor 80b of the exhaust gas purification unit 40 are inputted via the respective corresponding AD converters to the input port of the ECU 30. Meanwhile, the output port of the ECU 30 is connected through the corresponding drive circuits to the fuel injectors 3, a step motor for driving a throttle valve 10, the EGR control valve 19, the fuel pump 23, and the fuel supply valve 15. The fuel injectors 3 and the fuel supply valve 15 are thus controlled by the ECU 30. For example, the fuel (HC) can be supplied in a spot-like manner (or periodically) from the fuel supply valve 15 disposed in the exhaust passage 12, so that the temperature of the exhaust gas discharged from the engine unit 1 increases.

More specifically, the ECU 30 causes the fuel to be supplied (injected) from the fuel supply valve 15 into the exhaust pipe 12 on the basis of temperature information (signal) inputted from the temperature sensor 50a provided at the oxidation catalyst 50 for exhaust gas purification and/or the temperature sensor 80a provided at the particulate filter 80, or on the basis of pressure information (signal) inputted from the differential pressure sensor 80b. Thus, the ECU 30 actuates the fuel supply valve 15 at a predetermined time and timing to supply (inject) the fuel into the exhaust pipe 12 when the value (pressure signal) from the differential pressure sensor 80b inputted in a predetermined time cycle is detected to be equal to or higher than a predetermined value (that is, a differential pressure equal to or higher than a predetermined value), and/or when the value (temperature signal) from the temperature sensors 50a, 80a inputted in a predetermined time cycle is detected to be equal to or lower than a predetermined value (that is, a temperature equal to or lower than a predetermined value). When the differential pressure less than the predetermined value, or the temperature above the predetermined value is detected, the fuel is not supplied. The exhaust gas heated to a high temperature by the oxidation heat generated when the supplied fuel (HC) is oxidized in the oxidation catalyst 50 for exhaust gas purification raises the temperature of the filter 80 to a PM burning start temperature, thereby inducing the PM regeneration treatment, that is, the treatment by which the PM (particulate matter) collected in the filter 80 is burned and removed.

The configuration of the above-described control system does not by itself specify the present invention, and the control system that has been conventionally used in internal combustion engines (automotive engines) of this type can be used. More detailed explanation thereof is herein omitted.

The oxidation catalyst 50 for exhaust gas purification will be explained below in greater detail.

The oxidation catalyst for exhaust gas purification explained herein takes a powder-shaped or pellet-shaped form constituted by the abovementioned support and a noble metal (oxidation catalyst metal) supported on the support, but when the catalyst is provided in the exhaust system of an internal combustion engine such as a vehicle engine, an appropriate base material is typically provided.

Materials of various types and forms that have been conventionally used for such applications can be used as the base material. For example, a honeycomb base material having a honeycomb structure formed from a ceramic material such as silicon carbide (SiC) or cordierite having high heat resistance, or an alloy (stainless steel or the like) can be advantageously used. A honeycomb base material with a cylindrical outer shape is a suitable example. In such a material, through holes (cells) serving as exhaust gas passages are provided in the axial direction of the cylinder, and the exhaust gas can come into contact with a partition wall (rib wall) of each cell. The base material can have not only the honeycomb shape, but also a foam shape or a pellet shape. The entire base material can also have a columnar shape with an elliptical or polygonal, rather than circular, cross section.

FIG. 3 is a schematic diagram illustrating the configuration of the oxidation catalyst for exhaust gas purification according to one embodiment. Thus, as shown in FIG. 3, the oxidation catalyst 50 for exhaust gas purification according to the present embodiment has a honeycomb base material 52, a plurality of regularly arranged cells 56, and rib walls 54 constituting the cells 56.

Various materials that have been conventionally used for such applications can be used without any particular limitation for the base material. For example, honeycomb base materials having a honeycomb structure formed from a ceramic material such as cordierite and silicon carbide (SiC) or an alloy (stainless steel or the like) can be advantageously used. A honeycomb base material with a cylindrical outer shape is a suitable example. In such a material, through holes (cells) serving as exhaust gas passages are provided in the axial direction of the cylinder, and the exhaust gas can come into contact with a partition wall (rib wall) of each cell. The base material can have not only the honeycomb shape, but also a foam shape or a pellet shape. The entire base material can also have a columnar shape with an elliptical or polygonal, rather than circular, cross section.

FIG. 4 is an enlarged cross-sectional view illustrating schematically the oxidation catalyst 50 for exhaust gas purification disclosed therein. As shown in FIG. 4, the oxidation catalyst 50 for exhaust gas purification is provided with a base material 60 (corresponds to the rib walls 54) and a catalyst coat layer 62 formed on the base material 60.

The catalyst coat layer 62 may have a uniform configuration through the entire layer, or may be formed, as shown in FIG. 4, to have a two-layer structure, more specifically, a two-layer structure constituted by a lower layer section (bottom layer section) 64 close to the surface of the base material 60 and an upper layer section (surface layer section) 66 which is relatively far from the surface of the base material 60. The substances constituting the catalyst coat layer will be explained hereinbelow in greater details on the basis of the catalyst coat layer 62 having such two-layer structure.

The catalyst coat layer 62 of the oxidation catalyst 50 for exhaust gas purification disclosed herein is provided with supports 63, 65 mainly constituted by the above-described composite metal oxide, that is, the AZT oxide or AZ oxide. The expression "mainly constituted" used herein means to include a support that is constituted only by the AZT oxide or AZ oxide, and a support that also can include other compounds (for example, alumina or silica) that are used as supports for oxidation catalyst for exhaust gas purification for such application, with a portion thereof exceeding 50% by volume (or by mass) (for example, 70 to 80% or more) being constituted by the AZT oxide or AZ oxide.

Thus, the supports 63, 65 constituting the oxidation catalyst 50 for exhaust gas purification disclosed herein may be constituted only by the AZT oxide and/or AZ oxide, but also may include another compound (typically, an inorganic oxide) as an auxiliary component.

Examples of such compounds include metal oxides such as alumina (Al₂O₃), e.g., γ-alumina, silica (SiO₂), zirconia (ZrO₂), magnesia (MgO), titanium oxide (titania: TiO₂), and ceria (CeO₂), or a solid-solution (for example, ceria-zirconia (CeO₂-ZrO₂) composite oxide) thereof. A support with a high content ratio of the AZT oxide and/or AZ oxide in which the content ratio (mass ratio) of those auxiliary components is equal to or less than 30% of the entire support (for example, 5 to 30% by mass of the entire support), or a support constituted only by the AZT oxide and/or AZ oxide is particularly preferred.

Further, a support with a crystallite size determined by X-ray diffraction (XRD) equal to or less than 10 nm (typically 1 nm to 10 nm, in particular 2 nm to 5 nm) is preferred as the support to be used. By using the support with such a crystallite size, it is possible to form an oxidation catalyst for exhaust gas purification that demonstrates higher catalytic activity.

The AZT oxide and AZ oxide constituting the support of the oxidation catalyst for exhaust gas purification in accordance with the present invention will be explained below in greater detail.

As mentioned hereinabove, in the oxidation catalyst for exhaust gas purification disclosed herein, the AZT oxide or AZ oxide constituting the support is a composite metal oxide including Al and Zr, or Al, Zr and Ti as the constituent metal elements, at the following mass ratios, in terms of oxides:

| | |
|---|---|
| Al₂O₃ | 40 to 99% by mass, |
| ZrO₂ | 1 to 45% by mass, |
| TiO₂ | 0 to 15% by mass. |

The AZT oxide preferably includes those constituent metal elements, in terms of oxides, at the following ratios: Al₂O₃ 50 to 90% by mass, ZrO₂ 5 to 40% by mass, and TiO₂ equal to or less than 15% by mass (for example, 1 to 15% by mass, in particular, 2 to 15% by mass). It is even more preferred that those constituent metal elements, in terms of oxides, be contained at the following ratios: Al₂O₃ 50 to 80% by mass, ZrO₂ 10 to 40% by mass, and TiO₂ 1 to 15% by mass (in particular, 2 to 15% by mass). It is especially preferred that the content ratios satisfy the following relationship: ZrO₂ > TiO₂.

Further, the AZ oxide preferably includes those constituent metal elements, in terms of oxides, at the following ratios: Al₂O₃ 60 to 95% by mass and ZrO₂ 5 to 40% by mass. It is even more preferred that those constituent metal elements, in terms of oxides, be contained at the following ratios: Al₂O₃ 60 to 90% by mass and ZrO₂ 10 to 40% by mass.

The AZT oxide or the AZ oxide including the metal elements at the abovementioned ratios makes it possible to obtain an acidic-basic catalyst support having a particularly good balance of acid amount (acid centers) and base amount (base centers) with respect to the supported noble metal (oxidation catalyst metal).

Thus, in the base centers, that is, the sites of atoms or atom associations demonstrating basic properties, which are present on the surface of the support (solid body) constituted by the AZT oxide (or AZ oxide) of the abovementioned configuration, atoms (ions) of a noble metal, such as palladium or platinum, are strongly fixed (supported) through oxygen atoms (typically, O²⁻). Therefore, a strong sintering inhibition effect is demonstrated, and the noble metal grains can be prevented from growing.

Meanwhile, in the acid centers, that is, the sites of atoms or atom associations demonstrating acidic properties, which are present on the surface of the support (solid body) constituted by the AZT oxide (or AZ oxide) of the abovementioned configuration, electrons of the atoms (ions) of a noble metal, such as palladium or platinum, which is supported at this site, are caused to drift to the support side, whereby the bonding force of the oxygen present on the noble metal surface to the noble metal is weakened, thereby making it possible to increase the activity of the oxygen (typically, O²⁻) and increase the oxidation power of CO into CO₂.

The surface of the support (solid body) constituted by the AZT oxide (or AZ oxide) with the above-mentioned mass ratios has a good presence ratio (balance) of acid centers and base centers demonstrating the abovementioned operation effect.

As a result, the grain growth of the noble metal (particulate) supported on the support can be inhibited and the decrease in the number of catalytically active centers can be prevented even when the catalyst support is exposed to the high-temperature exhaust gas. Furthermore, stable CO oxidation can be continuously demonstrated and efficient oxidation (purification) treatment of the exhaust gas can be performed even in the case of a low-temperature exhaust gas.

It is especially preferred that the support disclosed herein have an initial specific surface area A equal to or greater than 110 m²/g, typically 100 m²/g < A < 200 m²/g (for example, 120 m²/g ≤ A ≤ 180 m²/g) in measurements by a BET 1 point method (nitrogen adsorption method). The support having such an initial specific surface area can ensure and maintain a sufficient number of sites in which atoms (ions) of a noble metal such as palladium and platinum can be supported.

Further, the preferred support, from among the supports disclosed herein, is mainly constituted by the composite metal oxide including Ti (that is, the AZT oxide) as the constituent metal element, such that a TiO₂ peak is substantially undetectable by X-ray diffraction (XRD) even after thermal durability treatment conducted for 3 hours at 1000°C in the air. A specific feature of the support is that typically the intensity ratio (I_{Ti}/I_{Zr}) of the XRD peak intensity (I_{Ti}) of rutile-type titania (TiO₂) at a 20 angle of 27 degrees (±0.2 degrees) to the XRD peak intensity (I_{Zr}) of zirconia (ZrO₂) at a 2θ angle of 30 degrees (±0.2 degrees) is equal to or less than 0.05, typically equal to or less than 0.02 (in particular, equal to or less than 0.01). Here, θ is a diffraction angle in X-ray diffraction.

When the dispersion state of the Al component, Zr component, and Ti component in the AZT oxide is not good, crystallites grow under the effect of the durability treatment (heat treatment) and XRD peaks tend to appear. This trend is particularly strong when the content ratio of the Ti component (TiO₂) is low. For example, when the dispersivity of the Zr component (ZrO₂) in which the Ti component (TiO₂) has been dissolved and of the Al component (Al₂O₃) is poor, the grains of the Ti component (TiO₂) grow with the grain growth of the Zr component (ZrO₂). Therefore, structural uniformity of the AZT oxide can be evaluated by observing the XRD peak of the Ti component (TiO₂) after the abovementioned thermal durability treatment.

Thus, in the AZT oxide that features the intensity ratio (I_{Ti}/I_{Zr}) equal to or less than 0.05, typically equal to or less than 0.02 (in particular, equal to or less than 0.01), the three components, namely, the Al component, Zr component, and Ti component, are present in a state with a high degree of dispersivity, and a particularly high catalytic activity can be realized.

A method for manufacturing the AZT oxide or AZ oxide is not particularly limited, and the oxide can be manufactured, for example, by a co-precipitation method, a sol-gel method, and a hydrothermal synthesis method. For example, the AZT oxide or AZ oxide with the target mass ratio (composition ratio) can be obtained by a typical co-precipitation method including a process of mixing, as desired, an appropriate surfactant with a mixed aqueous solution constituted by water-soluble salts (for example, nitrates) of aluminum, zirconium, and optionally titanium, then adding an alkaline substance (ammonia water or the like) to increase gradually pH, thereby generating a co-precipitate, and then heat treating the co-precipitate.

As shown schematically in FIG. 4, the supports 63, 65 constituting the catalyst coat layer 62 of the oxidation catalyst 50 for exhaust gas purification disclosed herein can include various noble metal particles 72, 74 as the oxidation catalyst metal 70. For example, palladium (Pd), platinum (Pt), ruthenium (Ru), and gold (Au) are the preferred noble metal species. In the catalyst for oxidizing CO and other compounds, those noble metals may be also used in the form of alloys.

Palladium (Pd) and/or platinum (Pt) is the preferred noble metal species capable of functioning as the oxidation catalyst metal 70. In terms of catalytic activity, those noble metals demonstrate oxidation power higher than that of other metal species and are preferred for CO oxidation. Palladium (Pd) is particularly preferred because it demonstrates high resistance to HC poisoning and can maintain high catalytic activity even when HC is contained at a comparatively high concentration in the exhaust gas. Further, platinum (Pt) is also an advantageous oxidation catalyst metal since it demonstrates good catalyst performance in oxidizing CO contained in low-temperature exhaust gas and is resistant to the so-called sulfur poisoning (S poisoning), which is the reduction in oxidation performance (purification performance) caused by coating with a sulfur component (for example, sulfur oxide). However, since platinum has low resistance to the aforementioned HC poisoning, it is preferred that platinum be used in combination with the below-described hydrocarbon adsorbent. Further, as shown in the figure, it is preferred that platinum particles 72 be used together with palladium particles 74.

From the standpoint of increasing the surface area of contact with the exhaust gas, it is preferred that the palladium particles 74 have a sufficiently small diameter. Typically, it is preferred that the average particle diameter of noble metal particles determined by a CO pulse adsorption method be about 5 nm or less, and in the oxidation catalyst for exhaust gas purification disclosed herein, the noble metal particles with an average particle diameter equal to or less than 5 nm can be prevented from sintering and this particle diameter can be maintained even in a long-term usage. It is especially preferred that the average particle diameter of the noble metal particles be equal to or less than 2 nm.

The amount of the noble metal particles contained in the oxidation catalyst for exhaust gas purification disclosed herein is not particularly limited, provided that CO and HC contained in the exhaust gas can be oxidized (purified). For example, a suitable content of the oxidation catalyst metal in a unit volume (1 L) of the catalyst coat layer is equal to or less than about 20 g/L, and the preferred content is about 1 to 10 g/L. For example, the advantageous content is about 1 to 5 g/L. Where the content of the oxidation catalyst metal is less than 1 g/L, the oxidation catalyst metal amount appears to be insufficient. Meanwhile, where the content of the oxidation catalyst metal exceeds 20 g/L, the sintering (grain growth) can be enhanced. Such a content is also undesirable from the standpoint of cost.

Where palladium particles 74 are used together with platinum particles 72 when the catalyst coat layer 62 having a two-layer structure, such as shown in FIG. 4, is formed, the content ratio of the palladium particles 74, which have high resistance to HC poisoning, may be set higher for the upper layer section 66 than for the lower layer section 64. In other words, the content ratio of the platinum particles 72, which have high CO oxidation power, but low resistance to HC poisoning, may be set higher in the lower layer section than in the upper layer section.

As shown schematically in FIG. 4, the oxidation catalyst 50 for exhaust gas purification disclosed herein can be provided with a hydrocarbon adsorbent 68. The hydrocarbon adsorbent is particularly preferred when exhaust gas from a diesel engine is processed. The hydrocarbon adsorbent 68, as referred to herein, is a material having a porous structure and adsorbing hydrocarbons into the porous structure.

Zeolite particles selected from the group consisting of A-type zeolite, ferrierite-type zeolite, ZSM-5 zeolite, mordenite-type zeolite, β-type zeolite, X-type zeolite, Y-type zeolite, and combinations thereof can be used as the hydrocarbon adsorbent 68. It is preferred that a particulate zeolite be used.

Further, when the catalyst coat layer 62 with a two-layer structure, such as shown in FIG. 4, is formed, from the standpoint of rapidly adsorbing HC contained in the exhaust gas, it is preferred that the hydrocarbon adsorbent 68 such as zeolite particles be contained at least in the upper layer section 66.

The content of the hydrocarbon adsorbent 68 such as zeolite particles in the oxidation catalyst for exhaust gas purification disclosed herein is not particularly limited, provided that HC contained in the exhaust gas can be advantageously adsorbed, and this content is a design matter that can be changed according to the HC adsorption performance of the hydrocarbon adsorbent 68 used. For example, the appropriate content of the hydrocarbon adsorbent per unit volume (1 L) of the catalyst coat layer is about 10 to 200 g/L, and the preferred content is about 20 to 100 g/L.

The catalyst coat layer 62 of the oxidation catalyst for exhaust gas purification disclosed herein can be formed by wash coating a slurry including a particulate support and metal particles supported on the support on the surface of the base material 60 (54).

When the catalyst coat layer 62 with a two-layer structure, such as shown in FIG. 4, is formed, the upper layer section 66 can be formed, first, by wash coating a slurry for forming the lower layer section 64 on the base material 60 (54) and then wash coating the slurry for forming the upper layer section 66 on the surface of the lower layer section 64. It is preferred that a binder be included in the slurry in order to attach closely the slurry, as appropriate, to the surface of the base material 60 (54) (or the surface of the lower layer section 64) in the process of forming the catalyst coat layer 62 (64, 66) by the wash coat method. For example, alumina sol or silica sol can be used as the binder.

The conditions for firing the wash-coated slurry depend on the shape and dimensions of the base material 60 (54) or support 63, 65, but the firing is typically performed for a period of time equal to or less than 6 hours (for example, about 1 to 4 hours) at a temperature about 400 to 1000°C (for example, 500 to 600°C). The formation of the catalyst coat layer on the basis of such a wash coating method can be implemented by a method that is used for producing the conventional oxidation catalyst for exhaust gas purification and is not a specific feature of the present invention.

The catalyst coat layer formed in the oxidation catalyst for exhaust gas purification disclosed herein may have any thickness, provided that the catalyst can demonstrate advantageous functions in treating the exhaust gas. The appropriate thickness is typically about 10 µm to 200 µm, and the preferred thickness is about 30 µm to 100 µm. The thickness referred to herein is an average thickness. For example, the average thickness can be obtained by cutting the base material at positions at a distance of about 35 mm from the exhaust gas inflow end surface and outflow end surface, measuring the thickness of the catalyst coat layer in the corner portions and side portions (a total of 16 locations) with respect to any four cells at each end surface side, and calculating an average value of the measured values.

The contents of the present invention will be described below in greater detail based on several test examples, but the present invention is not intended to be limited to the contents disclosed in the specific examples below.

<Test Example 1: Example of manufacturing an oxidation catalyst using the AZT oxide or AZ oxide as a support>

Several types of samples (oxide powders) of AZT oxides or AZ oxides with mutually different mass ratios were fabricated. More specifically, oxide powders of a total of 16 types (the powders of sample 1-1 and sample 2-1 are identical) of samples 1-1 to 1-6, 2-1 to 2-5, 3-1, and 4-1 to 4-4 shown in Table 1 were prepared.

**[Table 1]**

| Sample No. | Al₂O₃ | ZrO₂ | TiO₂ | SiO₂ |
|---|---|---|---|---|
| 1-1 | 60 | 28 | 12 | - |
| 1-2 | 80 | 14 | 6 | - |
| 1-3 | 66 | 24 | 10 | - |
| 1-4 | 50 | 35 | 15 | - |
| 1-5 | 33 | 47 | 20 | - |
| 1-6 | 20 | 56 | 24 | - |
| 2-1 | 60 | 28 | 12 | - |
| 2-2 | 60 | 40 | - | - |
| 2-3 | 60 | 36 | 4 | - |
| 2-4 | 60 | 20 | 20 | - |
| 2-5 | 60 | 12 | 28 | - |
| 3-1 | 100 | - | - | - |
| 4-1 | 90 | - | - | 10 |
| 4-2 | 80 | - | - | 20 |
| 4-3 | 70 | - | - | 30 |
| 4-4 | 50 | - | - | 50 |

| | | | | |
|---|---|---|---|---|
| (Volumes are expressed in percent by mass.) | | | | |

More specifically, aluminum nitrate was dissolved in pure water to prepare an aqueous solution as an Al source (aqueous solution 1). Likewise, zirconium oxynitrate was dissolved in pure water to prepare an aqueous solution as a Zr source (aqueous solution 2). Titanium tetrachloride was dissolved in pure water to prepare an aqueous solution as a Ti source (aqueous solution 3). An aqueous ammonia solution including ammonia in an amount that is by a factor of 1.2 greater than necessary was prepared as an alkaline solution capable of neutralizing the prepared aqueous solutions 1 to 3.

Some of the aqueous solutions 1 to 3 were selected according to the sample composition that is the object of fabrication, and the predetermined amounts thereof were added to and mixed with a predetermined amount of the aqueous ammonia solution under stirring performed with a stirrer. After the adding, the stirring was continued for at least 1 hour or longer and the mixed solution was then filtered and a precipitate was recovered. The obtained precipitate was dried in the air at 150°C and then calcined for 5 hours at 600°C in the air. The fired products thus obtained were pulverized to obtain powders of samples 1-1 to 1-6 and 2-1 to 2-5 including Al, Zr and Ti, or Al and Zr at mass ratios, in terms of oxides, shown in Table 1 and sample 3-1 (alumina).

Further, aluminum isopropoxide and tetraethoxysilane were dissolved in ethanol at a predetermined weight ratio, the solution was stirred for 2 hours at 60°C, subjected to hydrolysis by a sol-gel method, and then cooled to room temperature and filtered. The obtained precipitate was dried in the air and then calcined for 2 hours at 600°C in the air. The calcined products thus obtained were pulverized to obtain the powders of samples 4-1 to 4-4 including Al and Si, in terms of oxides, at the mass ratios shown in Table 1.

Pellet-shaped oxidation catalysts for exhaust gas purification were prepared by using the powders of the samples prepared in the above-described manner. More specifically, a tetraamine platinum nitrate solution and aqueous solution of palladium nitrate adjusted to appropriate concentrations and an appropriate amount of pure water were mixed with the power of each sample serving as a substrate, the mixtures were stirred for 2 hours and then dried at 130°C and calcined for 1 hour at 500°C in the air to produce oxidation catalysts for exhaust gas purification for each sample supporting platinum (Pt) particles and palladium (Pd) particles. The supported amount of platinum (Pt) particles and palladium (Pd) particles was 1% by mass (Pt) and 1.5% by mass (Pd), with the support being taken as 100% by mass.

The powders supporting the noble metal particles that have thus been obtained were press molded into pellets and used for the below-described tests.

### <Test Example 2: Measurement of acid amount and base amount>

The acid amount and base amount of each sample were evaluated on the basis of a typical temperature-programmed desorption (TPD). Regarding the acid amount, the supplied samples were caused to adsorb ammonia as a base probe molecule, and the amount ammonia desorbed with the increase in temperature and the desorption temperature were measured (NH₃-TPD). Meanwhile, regarding the base amount, the supplied samples were caused to adsorb carbon dioxide as an acid probe molecule, and the amount of carbon dioxide desorbed with the increase in temperature and the desorption temperature were measured (CO₂-TPD).

Then, the acid amount and base amount for each sample were determined from a value (integrated value/sample weight) obtained by dividing an integrated value of ion intensity (acid amount m/z =16, base amount m/z = 44) obtained from the mass (MASS) measurement with a mass analyzer by the sample weight. The analysis results are shown in FIGS. 5 to 8. Thus, FIG. 5 is a graph showing the relationship between the acid amount of each supplied sample and the Al₂O₃ amount. FIG. 6 is a graph showing the relationship between the base amount of each supplied sample and the Al₂O₃ amount. FIG. 7 is a graph showing the relationship between the base amount of each supplied sample and the TiO₂ amount. FIG. 8 is a graph showing the relationship between the acid amount of each supplied sample and the ZrO₂ amount. The results shown in the graphs demonstrate changes in acid centers and base centers between the AZT oxides (or AZ oxides) having Al₂O₃, ZrO₂, and TiO₂ (in terms of oxides) at different mass ratios.

### <Test Example 3: Evaluation of noble metal sintering inhibition effect>

Catalytic activity (catalytic activity of CO oxidation) and the state of the catalysts after thermal degradation durability treatment were then evaluated. Thus, the oxidation catalysts (pellets) for exhaust gas purification of the samples were calcined for about 5 hours at 750°C in the air.

The average particle diameter of palladium particles contained in each sample after the abovementioned calcining (that is, after thermal degradation) for 5 hours at 750°C was calculated by a CO pulse adsorption method. The results are shown in the graph in FIG. 9. As follows from the results shown in the graph, for example, when the palladium support amount was 1.5% by mass, it was found that by using the AZT oxide or AZ oxide with a ratio of the base amount to the aluminum support (sample 3-1) of about 0.25 or higher as a support, it was possible to maintain the average particle diameter of palladium particles after the thermal degradation at 2 nm or less. The average particle diameter changes depending on the supported amount, but the trend to the decreasing average particle diameter does not change within the appropriate range of base amount.

### <Test Example 4: Evaluation of CO oxidation activity>

Then, 1 g of the catalyst (pellet) after the abovementioned calcining was placed in an evaluation device, and the gas of the composition shown in Table 2 was flown in at the inlet gas temperature set to 500°C. The gas flow rate was 15 L/min.

More specifically, after 1 g of the oxidation catalyst for exhaust gas purification was placed in the evaluation device, the gas of the composition shown in Table 2 was caused to flow in at a gas flow rate of 15 L/min, while the oxidation catalyst for exhaust gas purification was heated from 65°C at a temperature rise rate of 20°C/min, and the concentration of carbon monoxide (CO) in the outlet was measured. The temperature at the time the CO concentration at the gas loading time was reduced by 50 mol% by purification was calculated as the CO 50% purification temperature (°C).

**[Table 2]**

| Gas composition | CO/C₃H₆/NO/O₂/CO₂/H₂O = 1500 ppm/1000 ppmC/200 ppm/10%/10%/3% (balance gas: N₂) |
|---|---|
| Gas flow rate | 15 L/min |
| Temperature rise rate | 20°C/min |

FIG. 10 shows the calculated CO 50% purification temperature (°C) and the average particle diameter of palladium particles after the abovementioned thermal degradation. The results shown in the graph clearly indicate that the CO 50% purification temperature equal to or lower than 180°C, which was a good result, was obtained in a sample in which the average particle diameter of palladium particles was maintained at 2 nm or less.

### <Test Example 5: Evaluation of state of noble metal (Pt and Pd) in catalyst>

The electron state (valence) of the noble metal (Pt and Pd) supported on the catalyst supports of the samples was examined by an in-situ X-ray absorption fine structure analysis (XAFS). Thus, after the oxidation treatment performed in the oxidation atmosphere (10% O₂, residual gas N₂) was performed in advance at 500°C, the temperature was lowered to 65°C and the height of the peak originating in a d-electron vacancy called White Line was measured from L3-edge spectra of platinum and palladium by using the available X-ray absorption fine structure analyzer. It is known that the valence of the test metal species increases with the increase in the peak intensity. The normalized peak height was obtained by normalizing, with the absorption height of the L3-edge taken as 1. The results for Pt are shown in FIGS. 11 and 12, and the results for Pd are shown in FIGS. 13 and 14.

The graphs clearly show that where the ratio of the acid amount to that of the alumina support (sample 3-1) was greater than 1, the noble metal (Pt, Pd) supported on the support could maintain the single metal (that is, low-valence) state without entering the oxide (that is, high-valence) state, regardless of the abovementioned oxidation treatment at 500°C. For this reason, as shown in FIGS. 12 and 14, the CO 50% purification temperature equal to or less than 190°C, which was a good result, was obtained.

### <Test Example 6: Measurement of specific surface area of support>

The specific surface area of oxide powders of samples 1-1, 1-3, 1-4, and 1-5, from among the oxide powders shown in Table 1, was measured on the basis of a typical BET 1 point method (nitrogen adsorption method) using nitrogen as the adsorption gas. The results are shown in FIG. 17.

As follows from the graph (FIG. 17), in samples 1-4, 1-1, and 1-3 in which the content ratio of Al component (Al₂O₃), in terms of oxides, was equal to or higher than 40% by mass, the specific surface area was greater than 110 m²/g (more specifically, equal to or greater than 140 m²/g and less than 20 m²/g). Meanwhile, in sample 1-5 in which the content ratio of Al component (Al₂O₃), in terms of oxides, was less than 40% by mass, the specific surface area was less than 110 m²/g.

### <Test Example 7: Measurement of XRD peak intensity ratio (I_{Ti}/I_{Zr}) of support>

The XRD peak intensity ratio (I_{Ti}/I_{Zr}) after thermal durability treatment of oxide powders of samples 1-1, 2-3, and 2-4, from among the oxide powders shown in Table 1, was examined. Thus, the samples were disposed inside an electric furnace (furnace atmosphere was air) and heat treated for 3 hours at 1000°C. Then, XRD patterns were measured for the samples cooled to room temperature, and the ratio (I_{Ti}/I_{Zr}) of the peak intensity (I_{Ti}) of rutile-type titania (TiO₂) at a 2θ angle of 27 degrees (±0.2 degrees) to the peak intensity (I_{Zr}) of zirconia (ZrO₂) at a 2θ angle of 30 degrees (±0.2 degrees) was measured. The results are shown in FIG. 18.

As clearly follows from the graph (FIG. 18), for the samples 2-3 and 1-1 for which the content ratio of Ti component (TiO₂), in terms of oxides, was equal to or less than 15% by mass, the peak intensity (I_{Ti}/I_{Zr}) was equal to or less than 0.02, and the peak of TiO₂ at a level substantially undetectable by the XRD. Meanwhile, in the sample 2-4 in which the content ratio of Ti component (TiO₂), in terms of oxides, was 20% by mass, the peak intensity (I_{Ti}/I_{Zr}) was greater than 0.1 and close to 0.15, and the growth of TiO₂ grains was observed.

As follows from the results of the above-described test examples, in the oxidation catalyst for exhaust gas purification disclosed herein, by using the AZ oxide or AZT oxide with a mass ratio (in terms of oxides) of Al and Zr, or Al, Zr and Ti within the above-described ranges, it is possible to realize the balanced operation effects in the base sites and acid sites. Therefore, the substance which is the object of purification, such as CO in exhaust gas, can be effectively and stably oxidized (purified) over a long period of time not only in a high-temperature range, but also in a low-temperature range (for example, about 200 to 400°C, or 200°C or below, for example, about 180°C or below, for example, about 150 to 200°C).

Several advantageous examples of the oxidation catalyst for exhaust gas purification disclosed herein will be explained below.

### <Manufacturing example of oxidation catalyst for exhaust gas purification>

In the present example, a total of four samples, namely, sample 1-1, sample 1-2, sample 1-4, and sample 2-3 were used (Table 1) as the supports (in a powdered state). Sample 3-1, which was the alumina support was used as a comparative example (Table 1). Pt and Pd were used as the noble metal. The method and materials for supporting the noble metals on the support were the same as in the above-described test examples, and the redundant explanation thereof is herein omitted. A BEA-type zeolite (Si/Al ratio = 40) was used as a hydrogen adsorbent. Further, in the present example, the catalyst coat layer of a two-layer structure such as shown in FIG. 4 was formed.

The slurry for forming the upper layer section of the catalyst coat layer was prepared by mixing 25 g/L of a sample support supporting Pt (0.67 g/L) and Pd (0.33 g/L), 60 g/L of BEA zeolite, an aqueous solution of aluminum nitride with an Al₂O₃ amount of 17.5 g after firing as a binder, and an appropriate amount of pure water.

Meanwhile, the slurry for forming the lower layer section of the catalyst coat layer was prepared by mixing 80 g/L of a sample support supporting Pt (1.33 g/L) and Pd (0.67 g/L), an aqueous solution of aluminum nitride with an Al₂O₃ amount of 17.5 g after firing as a binder, and an appropriate amount of pure water.

The slurry for forming the lower layer section was wash coated on the surface of a honeycomb base material (volume 2 L) made from cordierite. The lower layer section was formed by calcining for 1 hour at 500°C after circulation drying.

The slurry for forming the upper layer section was wash coated by the same method on the lower layer section formed on the base material. The upper layer section was formed by calcining for 1 hour at 500°C after circulation drying. As a result, oxidation catalysts for exhaust gas purification were obtained in which the catalyst coat layer of a two-layer structure was provided on the base material. The material composition ratios (% by mass) contained in the oxidation catalysts for exhaust gas purification obtained herein is shown in Table 3 below.

**[Table 3]**

| Sample No. | Material composition ratio (% by mass) | | | |
|---|---|---|---|---|
| | Al₂O₃ | ZrO₂ | TiO₂ | SiO₂ |
| 3-1 (Comparative Example) | 71.2 | 0 | 0 | 28.8 |
| 1-1 | 50.2 | 14.7 | 6.3 | 28.8 |
| 1-2 | 60.7 | 7.4 | 3.2 | 28.8 |
| 1-4 | 45.0 | 18.4 | 7.9 | 28.8 |
| 2-3 | 50.2 | 18.9 | 2.1 | 28.8 |

### <Oxidation performance evaluation test>

The oxidation catalysts for exhaust gas purification of five types manufactured in the above-described manner were subjected to thermal durability treatment by heating for 37 hours at a temperature of 750°C in the air by using an electric furnace.

Exhaust gas was supplied from a diesel engine with a capacity of 2.2 L to the oxidation catalysts for exhaust gas purification subjected to the abovementioned thermal durability treatment, and the CO oxidation performance in the exhaust gas was evaluated. Thus, a NEDC (New European Driving Cycle) mode (see FIG. 15) regulated by the European emission standards was reproduced using a diesel engine. As a pretreatment, the regeneration treatment was performed by burning the particulate matter (PM) by setting the catalyst bed temperature to 600°C for 5 minutes. The revolution speed was adjusted such that the average temperature of the exhaust gas in "regions 2 to 4" was 150°C, and the CO purification efficiency (%) in "regions 2 to 4" (average temperature 150°C) was calculated.

In FIG. 16, the CO purification ratio (%) of each sample is shown as an increase ratio (%) related to the CO purification ratio of sample 3-1 (comparative example).

As follows from the results shown in FIG. 16, the oxidation catalysts for exhaust gas purification (a total of four samples) using the AZT oxide as a support within the contents disclosed herein maintain high catalytic activity enabling effective oxidation of CO in the exhaust gas in a low-temperature region even after the thermal durability treatment.

### Industrial Applicability

The oxidation catalyst for exhaust gas purification disclosed herein enables effective CO oxidation even when the exhaust gas temperature is comparatively low. Therefore, the oxidation catalyst for exhaust gas purification is advantageous for diesel engines in which the exhaust gas temperature generally tends to be lower than in gasoline engines.

### Reference Signs List

- 1: engine unit
- 2: combustion chamber
- 12: exhaust passage (exhaust pipe)
- 15: fuel supply valve
- 24: fuel tank
- 30: ECU
- 40: exhaust gas purification unit
- 50: oxidation catalyst for exhaust gas purification (DOC)
- 52: honeycomb base material
- 54: rib wall (partition wall)
- 56: cell (through hole)
- 60: base material
- 62: catalyst coat layer
- 63, 65: supports
- 64: lower layer section
- 66: upper layer section
- 68: hydrocarbon adsorbent
- 70: noble metal particles (oxidation catalyst metal)
- 72: platinum (Pt) particles
- 74: palladium (Pd) particles
- 80: particulate filter (DPF)
- 100: exhaust gas purification device

## Claims

1. An oxidation catalyst for exhaust gas purification, comprising:
a support; and
a noble metal that is supported on the support and catalyzes the oxidation of carbon monoxide, wherein
the support is mainly constituted by a composite metal oxide including, in terms of oxides, Al and Zr, or Al, Zr and Ti as constituent metal elements at the following mass ratios:
| | |
|---|---|
| Al₂O₃ | 40 to 99% by mass, |
| ZrO₂ | 1 to 45% by mass, |
| TiO₂ | 0 to 15% by mass. |

2. The oxidation catalyst for exhaust gas purification according to claim 1, comprising:
a base material and a catalyst coat layer formed on the base material, wherein
the catalyst coat layer has a support mainly constituted by the composite metal oxide and the noble metal supported on the support.

3. The oxidation catalyst for exhaust gas purification according to claim 1 or 2, wherein
the composite metal oxide includes, in terms of oxides, Al and Zr, or Al, Zr and Ti at the following mass ratios:
| | |
|---|---|
| Al₂O₃ | 50 to 90% by mass, |
| ZrO₂ | 5 to 40% by mass, |
| TiO₂ | 0 to 15% by mass. |

4. The oxidation catalyst for exhaust gas purification according to any one of claims 1 to 3, comprising palladium particles as the noble metal.

5. The oxidation catalyst for exhaust gas purification according to claim 4, wherein an average particle diameter of the palladium particles determined by a CO pulse adsorption method is equal to or less than 5 nm.

6. The oxidation catalyst for exhaust gas purification according to any one of claims 1 to 5, further comprising a hydrocarbon adsorbent.

7. The oxidation catalyst for exhaust gas purification according to claim 6, comprising zeolite particles as the hydrocarbon adsorbent.

8. The oxidation catalyst for exhaust gas purification according to any one of claims 1 to 7, wherein an initial specific surface area of the support measured by a BET 1 point method is equal to or greater than 110 m²/g.

9. The oxidation catalyst for exhaust gas purification according to any one of claims 1 to 8, wherein the support is mainly constituted by the composite metal oxide including Ti as the constituent metal element, such that a TiO₂ peak is substantially undetectable by X-ray diffraction (XRD) even after thermal durability treatment conducted for 3 hours at 1000°C in the air.

10. The oxidation catalyst for exhaust gas purification according to any one of claims 1 to 9, that is used for purifying exhaust gas of a diesel engine.

11. An exhaust gas purification device that purifies exhaust gas discharged from an engine, comprising:
an exhaust passage communicating with the engine; and
an exhaust gas purification unit disposed in the exhaust gas passage, wherein
the exhaust gas purification unit includes the oxidation catalyst for exhaust gas purification according to any one of claims 1 to 10.
